# EUROPÄISCHE PATENTANMELDUNG

(11) **EP 1 405 760 A1**
(43) Veröffentlichungstag der Anmeldung: **07.04.2004**
(21) Anmeldenummer: 02022175.0
(22) Anmeldetag: 04.10.2002
(51) Int. Cl.: B60P 3/06, B60P 3/07, B60P 3/36, B60P 1/43

(54) **Wohnmobil mit Garage**

(71) Anmelder: Maurer, Beat, CH-5723 Teufenthal (CH)
(72) Erfinder: Maurer, Beat, CH-5723 Teufenthal (CH)
(74) Vertreter: Blum, Rudolf Emil Ernst

(57) **Zusammenfassung**

Das Wohnmobil (1) hat im Heck eine Garage (3) für ein Zusatzfahrzeug (2). Der Garagenboden (4) ist absenkbar. Er ist um ein Kippgelenk (7) drehbar gelagert. Das Absenken erfolgt mittels zwei Hydraulikzylindern (8). Der Garagenboden (4) weist einen Schlitten (9) auf, welcher mit einem Schlittenträger (11) verschiebbar verbunden ist. Der Schlitten (9) und mit ihm das Zusatzfahrzeug (2) kann mittels eines Hydraulikzylinders (10) aus der Garage (3) heraus- bzw. in die Garage (3) hineingefahren werden. Es sind dadurch weder Rampen noch ein Seilzug erforderlich. Der Garagenboden (4) kann mit einer Verriegelung (12) in der angehobenen Position fixiert werden. Die Garage (3) liegt sehr tief, was den Vorteil hat, dass der Raum über der Garage besser genutzt werden kann.

## Beschreibung

Die Erfindung betrifft ein Wohnmobil mit Garage gemäss Oberbegriff des Anspruch 1.

Wohnmobile dieser Art, wie sie in DE 20119419 U1 beschrieben sind, haben eine Garage, welche insbesondere zum Mitführen eines Zusatzfahrzeuges, z.B. eines kleinen Personenkraftwagens, dient.

Bei den meisten Wohnmobilen mit Garage wird das Zusatzfahrzeug über zwei parallele Rampen in die Garage gebracht. Dabei stellt sich das Problem, dass die engen Platzverhältnisse in der Garage meist kein Öffnen der Türen mehr zulassen. Der Fahrer muss deshalb entweder durch die Heckklappe des Zusatzfahrzeuges aussteigen, oder aber, das Zusatzfahrzeug wird über eine Seilwinde, d.h. ohne Fahrer in die Garage gezogen. Zuvor müssen jeweils die Rampen korrekt aufgestellt und ausgerichtet werden. Das Ein- und Ausparken ist dadurch umständlich und zeitaufwendig.

In den meisten Fällen ist die Garage im Heck des Wohnmobils angeordnet und das Zusatzfahrzeug wird längs parkiert. Bei der in DE 20119419 U1 beschriebenen Garage wird das Zusatzfahrzeug quer parkiert. Dies hat zwar den Vorteil eines geringen Platzbedarfs, aber zugleich den Nachteil, dass die maximale Länge des Zusatzfahrzeuges derart begrenzt ist, dass diese Lösung für vierplätzige Zusatzfahrzeuge nicht geeignet ist.

Bekannte Lösungen, bei denen das Hilfsfahrzeug längs parkiert wird, haben den Nachteil, dass durch die Garage die Abmessungen des Wohnraums stark begrenzt werden. Insbesondere ist der Raum, der über der Garage bleibt, für eine Nutzung als Wohn- bzw. Schlafraum aufgrund seiner geringen Höhe ungeeignet.

Es stellt sich daher die Aufgabe, ein Wohnmobil der eingangs genannten Art bereitzustellen, das die oben genannten Nachteile zumindest teilweise vermeidet.

Diese Aufgabe wird von Anspruch 1 gelöst, indem die Garage eine Boden aufweist, welcher zumindest teilweise absenkbar ist. Dies hat den Vorteil, dass im Wesentlichen keine zusätzlichen Rampen erforderlich sind.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 eine schematische Gesamtansicht einer bevorzugten Ausführung des erfindungsgemässen Wohnmobils von der Seite,
Fig. 2 einen Längsschnitt der Garage einer bevorzugten Ausführung des erfindungsgemässen Wohnmobils während eines Ein- bzw. Ausparkvorgangs,
Fig. 3 die Garage aus Fig. 2, ebenfalls in einem Längsschnitt, jedoch mit einem in einer angehobenen Position verriegelten Garagenboden,
Fig. 4 die Garage aus Fig. 3 in einer Heckansicht,
Fig. 5 eine Heckansicht eines erfindungsgemässen Wohnmobils in einer bevorzugten Ausführungsform,
Fig. 6 die Ansicht aus Fig. 5, jedoch nachdem der Garagenboden abgesenkt wurde,
Fig. 7 in einer Draufsicht den Grundriss des erfindungsgemässen Wohnmobils in einer bevorzugten Ausführungsform,
Fig. 8. einen Längsschnitt einer bevorzugten Ausführungsform des erfindungsgemässen Wohnmobils.

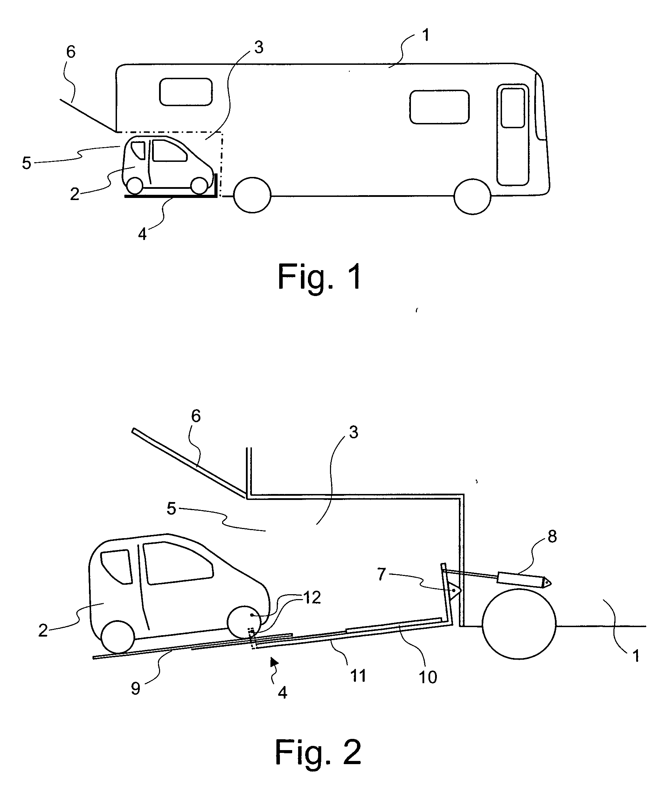

Fig. 1 zeigt eine schematische Gesamtansicht einer bevorzugten Ausführung des erfindungsgemässen Wohnmobils 1 von der Seite. Das Zusatzfahrzeug 2 ist in der Garage 3 parkiert. Es steht auf dem Garagenboden 4. Der Garagenboden 4 ist zumindest teilweise absenkbar. In der bevorzugten Ausführung ist er kippbar. Der Ausdruck "teilweise absenken" ist im vorliegenden Dokument so zu verstehen, dass "kippen" eine spezielle Form dieses Vorganges darstellt. Das Absenken bzw. Kippen hat den Vorteil, dass zum Ein- und Ausparken keine zusätzliche Rampe erforderlich ist. Die zufahrtsöffnung 5 bildet eine Ein-, bzw. Ausfahrt. Mit einer Heckklappe 6 kann die Zufahrtsöffnung 5 verschlossen werden. Der Garagenboden 4 bildet zugleich einen Teil des strassenseitigen Bodens des Wohnmobils 1. Mit "strassenseitiger Boden" ist dabei der Unterboden, d.h. der der Strasse zugewandte Teil der Karosserie, gemeint. Der Garagenboden 4 ist äusserst flach ausgestaltet. Das Zusatzfahrzeug 2 ist dadurch im Wesentlichen, d.h. von der Dicke des Garagenbodens 4 abgesehen, gerade so tief angeordnet, dass es nicht über die strassenseitigen Aussenmasse der Karosserie des Wohnmobils 1 hinaussteht. Dadurch kann die Garagendecke tief angeordnet werden und es bleibt über der Garage 3 ein bezüglich seiner Höhe gut nutzbarer Raum, der z.B. für ein Schlafzimmer verwendet werden kann.

Fig. 2 zeigt einen Längsschnitt der Garage 3 einer bevorzugten Ausführung des erfindungsgemässen Wohnmobils während eines Ein- bzw. Ausparkvorgangs. Der Garagenboden 4 wurde durch eine Drehung um Kippgelenk 7, angetrieben, bzw. gebremst, von zwei Hydraulikzylindern 8 abgesenkt. Kippgelenk 7 erlaubt eine Drehung um eine Kippachse, welche quer zum Wohnmobil 1 verläuft, d.h. im Wesentlichen parallel zu einer Hinterradachse des Wohnmobils. Das Kippgelenk 7 ist auf der der Zufahrtsöffnung 5 entgegengesetzten Seite der Garage 3 angeordnet. Die Hydraulikyzlinder 8 sind jeweils mit einem ersten Ende oberhalb des Kippgelenks 7 mit einem am Garagenboden 4 befestigten, bzw. mit dem Garagenboden 4 verschweissten Hebelelement verbunden. Mit einem zweiten Ende sind sie am Chassis des Wohnwagens 1 befestigt. Eine Expansion der Hydraulikzylinder 8 führt zu einem Absenken des Garagenbodens 4 bzw. eine Kontraktion zu einem Anheben des Garagenbodens 4. Der Garagenboden 4 umfasst einen Schlitten 9, welcher mit Schlittenträgern 11 geführt ist und mit einem weiteren Hydraulikzylinder 10 verschoben werden kann. Beim Einparken wird zunächst der Schlitten 9 aus der Garage 3 ausgefahren und mit seiner äusseren, d.h. dem Fahrzeug abgewandten, Kante bis auf Strassenniveau abgesenkt. Zumindest ist ein Absenken bis auf Strassenniveau im Falle einer im Wesentlichen durchgehend ebenen Strasse möglich. Bevorzugt können jedoch auch Strassen- bzw. Geländeunebenheiten ausgeglichen werden, d.h. dass auch ein Absenken unter das theoretische Niveau einer durchgehend ebenen Strasse möglich ist. Nach dem Absenken wird das Zusatzfahrzeug 2 auf dem Schlitten 9 abgestellt, wobei der Fahrer hier, im Gegensatz zu der Fahrzeugposition in der Garage 3, problemlos aussteigen kann, weil das Öffnen der Türen nicht durch die Seitenwände oder Gegenstände in der Garage 3 behindert wird. Schematisch sind die am Garagenboden 4 und an der Seitenwand des Wohnmobils 1 befestigten Verriegelungselemente 12 gezeigt. Die einzelnen Verrieglungselemente 12 kommen in einer angehobenen Position des Garagenbodens 4 paarweise übereinander zu liegen und werden dann mittels Bolzen, vorzugsweise hydraulisch angetriebenen Bolzen, miteinander verbunden.

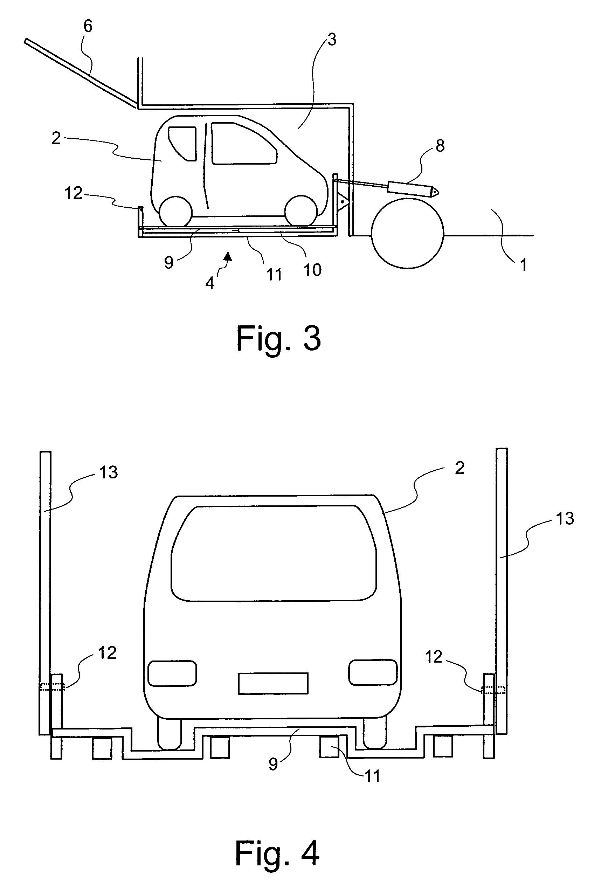

Fig. 3 zeigt die Garage 3 aus Fig. 2, ebenfalls in einem Längsschnitt, jedoch mit einem in der angehobenen Position verriegelten Garagenboden 4. In dieser Position bildet der Garagenboden 4 eine Verlängerung, bzw. ein Teil, des strassenseitigen Bodens des Wohnmobils 1. Das Verriegelungsmittel 12 umfasst Bolzen, mittels derer der Garagenboden 4 bzw. zu ihm gehörige Trag- oder Hebelelemente an den Seitenwänden 13 des Wohnmobils 1 befestigt ist. Die Verriegelung erfolgt bevorzugt automatisch, z.B. mit hydraulisch verschiebbaren Bolzen.

Fig. 4 zeigt die Garage aus Fig. 3 in einer Heckansicht, d.h. in der Zufahrtrichtung betrachtet. Das Zusatzfahrzeug 2 steht auf dem Schlitten 9. Der Schlitten 9 ist bevorzugt ein Aluminiumblech welches auf einem Schlittenträger 11 geführt ist. Der Schlittenträger 11 umfasst bevorzugt vier 4-Kant-Rohre, welche parallel zueinander in Fahrzeugrichtung angeordnet sind. Der Schlitten 9 weist zwei in Längsrichtung, d.h. in Ein- bzw. Ausparkrichtung, verlaufende Rinnen auf. Das Zusatzfahrzeug 2 steht dadurch tiefer und kann seitlich nicht verrutschen. Die Rinnen bilden für das Zusatzfahrzeug 2 eine Spur, was das korrekte Abstellen des Fahrzeuges auf dem Schlitten vereinfacht. Die Rinnen sind versetzt zu den 4-Kant-Rohren des Schlittenträgers 11 angeordnet und sind insbesondere so tief, dass die Unterseite des Schlittenblechs im Bereich der Rinnen im Wesentlichen auf gleichem Niveau oder tiefer ist als die Unterseite der 4-Kant-Rohre des Schlittenträgers 11. Der Garagenboden 4 hat dadurch im Bereich der Rinnen im Wesentlichen nur gerade die Dicke des Schlittenblechs, wodurch das Zusatzfahrzeug 2 noch tiefer zu stehen kommt. Der Schlitten 9 geht über die gesamte Breite des Wohnmobils 1, und bildet so zusammen mit dem Schlittenträger 11 einen Teil des strassenseitigen Bodens des Wohnmobils 1. In der angehobenen Position, d.h. in der Reiseposition, ist der Schlittenträger 11 mit Verriegelungsmitteln 12 fixierbar, indem Teile oder Ausleger des Schlittenträgers 11 oder des Schlittens 9, insbesondere Trag- oder Hebelelemente, mittels Bolzen mit der Seitenwand 13 des Wohnmobils verbunden werden.

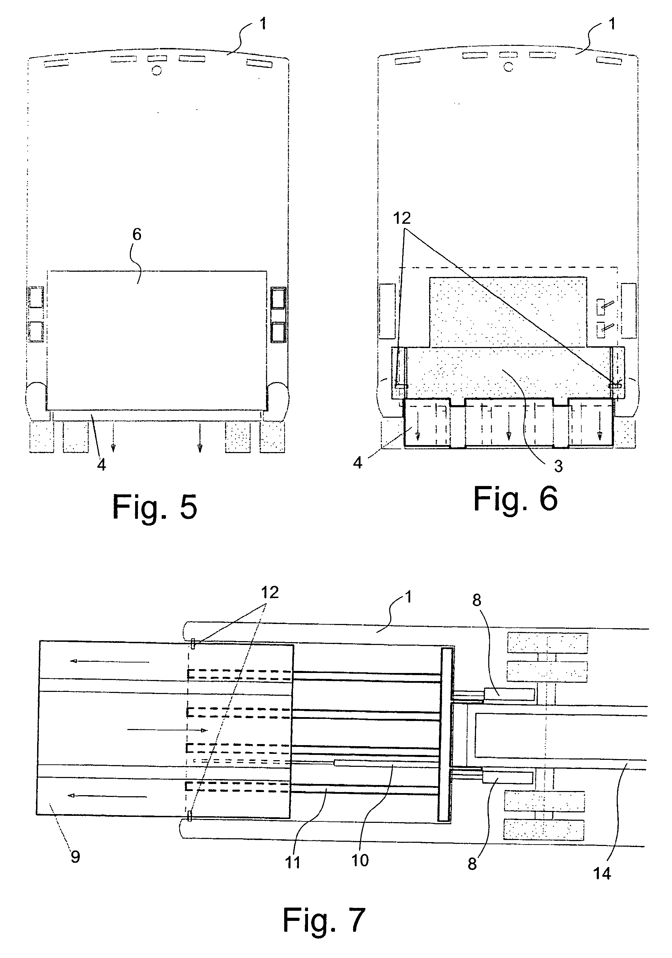

Fig. 5 zeigt eine Heckansicht eines erfindungsgemässen Wohnmobils 1 in einer bevorzugten Ausführungsform. Die Heckklappe 6 ist geschlossen. Unterhalb der Heckklappe 6 ist der Rand des Garagenbodens 4 zu sehen.

Fig. 6 zeigt die gleiche Ansicht wie Fig. 5, jedoch ohne Heckklappe und nachdem der Garagenboden 4 teilweise abgesenkt wurde. Schematisch sind die Verriegellungsmittel 12 gezeigt.

Fig. 7 zeigt in einer Draufsicht den Grundriss des erfindungsgemässen Wohnmobils 1 in einer bevorzugten Ausführungsform. Zwei Hydraulikzylinder 8 dienen zum Absenken bzw. Anheben des Garagenbodens. Der Schlitten 9 des Garagenbodens ist teilweise ausgefahren. Der Schlitten 9 ist verschiebbar mit den Schlittenträgern 11 verbunden. Das Verschieben erfolgt über einen weiteren Hydraulikzylinder 10. Schematisch ist die Position der Verriegelungsmittel 12 gezeigt. Der Schlittenträger 11 ist kippbar mit dem Chassis 14 des Wohnmobils verbunden.

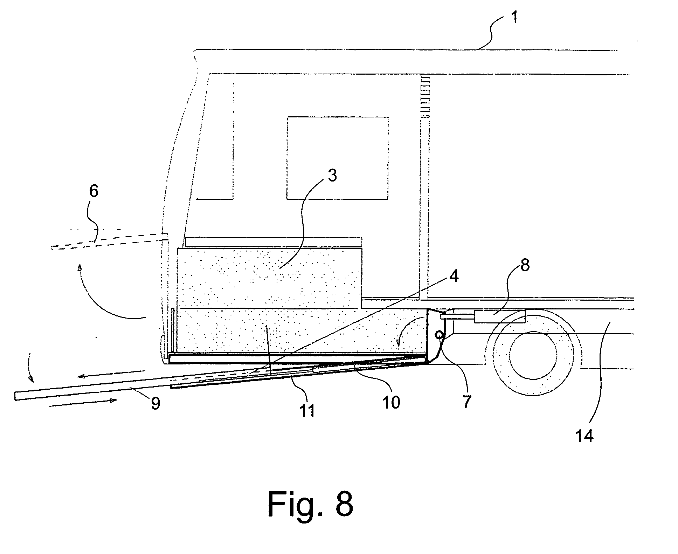

Fig. 8 zeigt einen Längsschnitt einer bevorzugten Ausführungsform des erfindungsgemässen Wohnmobils 1. Der Garagenboden 4 ist durch eine Rotation um Kippgelenk 7 teilweise abgesenkt. Die im Wesentlichen horizontal angeordneten Hydaulikzylinder 8 wurden dazu expandiert. Der Schlitten 9 ist durch eine Expansion von Hydraulikzylinder 10 teilweise ausgefahren. Die Garage 3 hat eine erste und eine zweite Deckenhöhe, wobei die Tatsache, dass das Zusatzfahrzeug vorne niedriger ist als in der Mitte für eine Vergrösserung des Wohnraumes genutzt wird.

Beim Entladen bzw. Ausparken des Zusatzfahrzeuges wird zunächst die Heckklappe 6 des Wohnmobils 1 geöffnet. Dann wird der Garagenboden 4 abgesenkt und der Schlitten 9 ausgefahren. Das Absenken des Garagenbodens 4 und das Ausfahren des Schlittens 9 kann unter anderem mit einer Fernsteuerung gesteuert werden. Insbesondere sind Endschalter und/oder eine Steuerlogik vorgesehen, welche unzulässige Steuerbefehle, wie z.B. das Ausfahren des Schlittens 9 bei geschlossener Heckklappe 6 oder das Losfahren bei abgesenktem oder nicht verriegeltem Garagenboden 4 verhindern.

Das Ausladen bzw. Ausparken und Einladen bzw. Einparken eines Zusatzsfahrzeuges 2 erfolgt bei dem erfindungsgemässen Wohnmobil 1 schnell und ohne das manuelle Eingriffe nötig sind.

Der Vollständigkeit halber und zum besseren Verständnis sei abschliessend noch Folgendes bemerkt:

Mit dem Begriff "Wohnmobil" sind in diesem Dokument generell Fahrzeuge gemeint, die als Wohnmobil nutzbar sind, also insbesondere auch zum Bewohnen geeignete Busse, bzw. Gesellschaftswagen, oder Lastwagen.

Mit dem Begriff "Garage" sind in diesem Dokument generell Räume gemeint, welche zur Aufnahme eines Fahrzeuges geeignet sind, also insbesondere auch ausreichend grosse Gepäckräume.

Bei den bevorzugten Ausführungsformen der Erfindung ist die Garage als allseitig geschlossener bzw. allseitig schliessbarer Raum ausgestaltet. Es besteht jedoch auch die Möglichkeit, die Garage als teilweise offenen Raum auszubilden, d.h. dass die Garage zum Beispiel nur durch eine Decke und einen Boden begrenzt ist und von der Seite her im Wesentlichen frei zugänglich ist.

## Patentansprüche

1. Wohnmobil mit einer Garage (3), wobei die Garage (3) einen Garagenboden (4) aufweist, **dadurch gekennzeichnet, dass** der Garagenboden (4) zumindest teilweise absenkbar ist.

2. Wohnmobil gemäss Anspruch 1, **dadurch gekennzeichnet, dass** der Garagenboden (4) einen Teil eines strassenseitigen Bodens des Wohnmobils (1) bildet.

3. Wohnmobil gemäss einem der vorhergehenden Ansprüche, **dadurch gekennzeichnet, dass** zumindest eine Kante des Garagenbodens (4) mindestens bis auf Strassenniveau absenkbar ist.

4. Wohnmobil gemäss einem der vorhergehenden Ansprüche, **dadurch gekennzeichnet, dass** sich der Garagenboden (4) im Wesentlichen über eine ganze Breite des Wohnmobils (1) erstreckt.

5. Wohnmobil gemäss einem der vorhergehenden Ansprüche, **dadurch gekennzeichnet, dass** die Garage (3) im Heck des Wohnmobils (1) angeordnet ist und insbesondere eine Zufahrtsöffnung (5) zur Garage (3) auf der Heckseite des Wohnmobils (1) vorgesehen ist.

6. Wohnmobil gemäss einem der vorhergehenden Ansprüche, **dadurch gekennzeichnet, dass** der Garagenboden (4) um eine Kippachse kippbar gelagert ist.

7. Wohnmobil gemäss Anspruch 6, **dadurch gekennzeichnet, dass** die Kippachse insbesondere auf einer einer Zufahrtsöffnung (5) entgegengesetzten Seite der Garage (3) angeordnet ist und die Kippachse insbesondere im Wesentlichen parallel zu Hinterradachsen des Wohnmobils (1) verläuft.

8. Wohnmobil gemäss einem der vorhergehenden Ansprüche, **dadurch gekennzeichnet, dass** zum zumindest teilweisen Absenken und/oder Anheben, bzw. Kippen, des Garagenbodens (4) mindestens ein Hydraulikzylinder (8) vorgesehen ist.

9. Wohnmobil gemäss Anspruch 8, **dadurch gekennzeichnet, dass** der mindestens eine Hydraulikzylinder (8) mit einem ersten Ende mit dem Garagenboden (4) oder einem daran befestigten Hebelelement und/oder mit einem zweiten Ende mit dem Chassis des Wohnmobils (1) verbunden ist.

10. Wohnmobil gemäss Ansprüchen 6 und 9, **dadurch gekennzeichnet, dass** das eine Ende des mindestens einen Hydraulikzylinders (8) oberhalb der Kippachse mit dem Garagenboden (4) oder einem daran befestigten Hebelelement verbunden ist, wobei eine Expansion des Hydraulikzylinders (8) ein zumindest teilweises Absenken des Garagenbodens bewirkt.

11. Wohnmobil gemäss einem der Ansprüche 8 bis 10, **dadurch gekennzeichnet, dass** der mindestens eine Hydraulikzylinder (8) im Wesentlichen horizontal angeordnet ist.

12. Wohnmobil gemäss einem der vorhergehenden Ansprüche, **dadurch gekennzeichnet, dass** zum Fixieren des Garagenbodens (4), insbesondere in einer angehobenen Position, Verriegelungsmittel (12) vorgesehen sind, wobei die Verriegelungsmittel (12) insbesondere hydraulisch betätigbar sind.

13. Wohnmobil gemäss einem der vorhergehenden Ansprüche, **dadurch gekennzeichnet, dass** der Garagenboden (4) einen Schlitten (9) und einen Schlittenträger (11) umfasst, wobei der Schlitten (9) aus dem bzw. in das Wohnmobil (1) schiebbar ist.

14. Wohnmobil gemäss Anspruch 13, **dadurch gekennzeichnet, dass** zum Verschieben des Schlittens (9) mindestens ein weiterer Hydraulikzylinder (10) vorgesehen ist.

15. Wohnmobil gemäss einem der Ansprüche 13 oder 14, **dadurch gekennzeichnet, dass** der Schlitten (9) mindestens zwei Rinnen aufweist, insbesondere Rinnen welche versetzt zu Elementen des Schlittenträgers (11) verlaufen und/oder in Ein-, bzw. Ausparkrichtung verlaufen, so dass sie für die Räder eines zu parkierenden Zusatzfahrzeuges (2) eine Spur bilden.
